# EUROPEAN PATENT APPLICATION

(11) **EP 4 733 363 A1**
(43) Date of publication of application: **29.04.2026**
(21) Application number: 24826251.1
(22) Date of filing: 19.06.2024
(51) Int. Cl.: C09D 167/04, C08G 63/60, C08J 3/03, C08J 3/20

(54) **BIODEGRADABLE POLYMER DISPERSION, PREPARATION METHOD THEREFOR, AND BIODEGRADABLE ARTICLE USING SAME**

(30) Priority: 20.06.2023 KR 20230078782
(71) Applicant: CJ Cheiljedang Corporation, Seoul 04560 (KR)
(72) Inventor: SHIM, Yoo-Kyoung, Seoul 04560 (KR); JEONG, Jae Deok, Seoul 04560 (KR); YOON, Ki Chull, Seoul 04560 (KR); HEO, Min Haeng, Seoul 04560 (KR); PARK, Soyun, Seoul 04560 (KR)
(74) Representative: Meissner Bolte Partnerschaft mbB
(86) International application number: PCT/KR2024/008476
(87) International publication number: WO 2024/262936

(57) **Abstract**

The present invention relates to a biodegradable polymer dispersion, a method for preparing the same, and a biodegradable article using the same. The method for preparing a biodegradable polymer dispersion comprises the steps of: (1) preparing a biodegradable suspension containing polyhydroxyalkanoate (PHA); and (2) filtering the biodegradable suspension by using rotor separation, wherein the biodegradable polymer dispersion has a solid content of 10-60 wt %, and the polyhydroxyalkanoate (PHA) includes 0.1-60 wt % of a repeating unit derived from 4-hydroxybutyrate on the basis of the total weight of the polyhydroxyalkanoate (PHA).

## Description

### Technical Field

The present disclosure relates to a biodegradable polymer dispersion, to a process for preparing the same, and to a biodegradable article using the same.

### Background Art

As environmental problems become more serious due to the indiscriminate use of synthetic plastics, interest in biodegradable polymers that have physical properties similar to those of synthetic plastics and can be naturally decomposed by microorganisms in soil or the ocean is increasing. Such biodegradable polymers are also widely used as dispersions to form coating layers to increase the lifespan and recyclability of various products.

In general, however, when a coating layer is formed only with a dispersion comprising a biodegradable polymer, processability and productivity are low when the coating layer is formed due to the high melting temperature (Tm) of the material itself, making it difficult to be used in a mass production system.

Meanwhile, in order to enhance the service lifespan and recyclability of various products such as paper, films, fibers, packaging materials, metals, various containers (e.g., bottles), and the like, it is important to enhance mechanical properties such as oil resistance and water resistance. In particular, a food packaging material for packing food that is rich in moisture or oil may have a problem in that the packaging material is torn by moisture or oil from the food, thereby contaminating the food or having a short service lifespan.

In order to enhance mechanical properties, water resistance, oil resistance, and the like, a process of forming a coating layer on the surface of a product is used; however, there is a problem in that biodegradability and recyclability are deteriorated due to the coating layer. For example, the biodegradability of a coating layer component that can enhance water resistance and oil resistance is low, or even if the biodegradability of the coating layer is excellent, the lifespan of a product may be poor due to low stability against bacteria. And additional processes may be required to remove the coating layer from the surface of a product once its use has been completed.

In addition, since it is difficult to achieve the desired concentration and viscosity of a coating solution, coating properties are reduced, resulting in low productivity and process efficiency. As a result, it is difficult to secure the desired physical properties; thus, there are still limitations in utilizing it for various purposes.

### Disclosure of Invention

### Technical Problem

A technical problem to be solved according to an embodiment is to provide a biodegradable polymer dispersion that is environmentally friendly by virtue of excellent biodegradability and biocompatibility, can enhance coatability, water resistance, and oil resistance, and can enhance productivity and efficiency, and a process for preparing the same.

In addition, a technical problem to be solved according to another embodiment is to provide a biodegradable article with enhanced lifespan, quality, and recyclability that uses the biodegradable polymer dispersion.

### Solution to Problem

An embodiment provides a process for preparing a biodegradable polymer dispersion, which comprises (1) preparing a biodegradable suspension comprising a polyhydroxyalkanoate (PHA); and (2) filtering the biodegradable suspension using rotor separation, wherein a solids content of the biodegradable polymer dispersion is 10% by weight to 60% by weight, and the polyhydroxyalkanoate (PHA) comprises a repeat unit derived from 4-hydroxybutyrate in an amount of 0.1% by weight to 60% by weight based on the total weight of the polyhydroxyalkanoate (PHA).

According to another embodiment, the rotor separation in step (2) may be carried out with a rotational force of greater than 900 g in G'-force.

According to another embodiment, the rotor separation in step (2) may be carried out with a rotational force of greater than 900 g to less than 35,000 g in G'-force.

According to another embodiment, the rotor separation in step (2) may be carried out using centrifuge.

According to another embodiment, after step (2), a step of heating the filtered product at a temperature of 50°C to 80°C for at least 10 minutes may be further carried out.

According to another embodiment, after the heating treatment step, a step of adding an additive comprising at least one selected from the group consisting of a thickener, wax, a pH adjuster, an antifoaming agent, and an antibacterial agent may be further carried out.

According to another embodiment, step (1) may comprise mixing the polyhydroxyalkanoate (PHA) and a dispersant to perform dispersing treatment.

According to another embodiment, the dispersant may comprise at least one selected from the group consisting of polyvinyl alcohol, polyvinylpyrrolidone, methyl polyethylene alkyl ether, sodium dodecylbenzene sulfonate, alkyl benzene sulfonate, nonylphenol ether sulfate, sodium lauryl sulfate, lithium dodecyl sulfate, alkyl phosphate, polypropylene glycol ester, coco betaine, and lecithin.

According to another embodiment, the dispersing treatment may be carried out at a rotational speed of 500 rpm to 30,000 rpm.

According to another embodiment, the polyhydroxyalkanoate (PHA) comprises a poly(3-hydroxybutyrate-co-4-hydroxybutyrate) copolymer, and the poly(3-hydroxybutyrate-co-4-hydroxybutyrate) copolymer may comprise a repeat unit derived from 4-hydroxybutyrate in an amount of 18% by weight to 60% by weight based on the total weight of the poly(3-hydroxybutyrate-co-4-hydroxybutyrate) copolymer.

According to another embodiment, the polyhydroxyalkanoate (PHA) may have a weight average molecular weight of 550,000 g/mole to 1,000,000 g/mole.

In addition, another embodiment provides a biodegradable polymer dispersion prepared by the above preparation process.

According to another embodiment, the viscosity measured with a Brookfield viscometer at 25°C may be greater than 10 cPs to 10,000 cPs.

According to another embodiment, when a coating layer is formed from the biodegradable polymer dispersion at a coating amount of 15 g/m² on a substrate, and when the Cobb water absorption test is performed according to the TAPPI T441 standard, the water resistance may be 3 g/m² to 50 g/m².

According to another embodiment, when a coating layer is formed from the biodegradable polymer dispersion at a coating amount of 15 g/m² on a substrate, which is evaluated according to the TAPPI T559 standard, the oil resistance kit rating may be 5 or higher.

Another embodiment provides a biodegradable article, which comprises a substrate; and a biodegradable coating layer formed on at least one side of the substrate using the biodegradable polymer dispersion.

### Advantageous Effects of Invention

The process for preparing a biodegradable polymer dispersion comprises filtering a biodegradable suspension using rotor separation, wherein the biodegradable suspension comprises a polyhydroxyalkanoate (PHA) comprising a repeat unit derived from 4-hydroxybutyrate (4-HB) in a specific amount. As a result, it is possible to obtain a dispersion with appropriate viscosity, high purity, and high concentration. When a coating layer is formed using the dispersion, the particles to be coated can be surface coated through low heat energy, thereby accelerating production speed and securing process efficiency, as well as enhancing dispersibility, coatability, and stability against bacteria.

In addition, a dispersion prepared according to the above process for preparing a biodegradable polymer dispersion has excellent dispersibility and coatability. A biodegradable article prepared using the same has excellent water resistance, oil resistance, and stability against bacteria, thereby achieving a long lifespan and high quality.

Accordingly, the biodegradable polymer dispersion according to an embodiment can be advantageously used as a coating solution to increase the lifespan, quality, and recyclability of various products such as paper, films, fibers, packaging materials, metals, and various containers, as well as is advantageous in terms of expanding its use since it can be advantageously used as an additive for improving various formulations and physical properties.

### Brief Description of Drawing

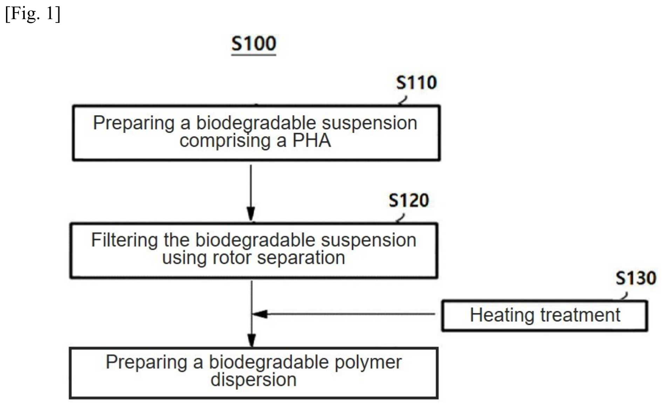

Fig. 1 is a flowchart schematically illustrating the process for preparing a biodegradable polymer dispersion according to an embodiment of the present disclosure.

### Best Mode for Carrying out the Invention

Hereinafter, the present disclosure will be described in detail. The present disclosure is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

The terms first, second, and the like in the present specification are used to describe various components. But the components should not be limited by the terms. The terms are used only for the purpose of distinguishing one component from another.

### Process for preparing a biodegradable polymer dispersion

In an embodiment, the process for preparing a biodegradable polymer dispersion comprises (1) preparing a biodegradable suspension comprising a polyhydroxyalkanoate (PHA); and (2) filtering the biodegradable suspension using rotor separation, wherein a solids content of the biodegradable polymer dispersion is 10% by weight to 60% by weight, and the polyhydroxyalkanoate (PHA) comprises a repeat unit derived from 4-hydroxybutyrate in an amount of 0.1% by weight to 60% by weight based on the total weight of the polyhydroxyalkanoate (PHA).

The process for preparing a biodegradable polymer dispersion uses a method of filtering by precipitation caused by rotational force using rotor separation, unlike the conventional methods of physical emulsification using high-temperature sterilization, homogenizer, high pressure, high shear, colloid mill, and the like. As a result, a stable biodegradable polymer dispersion with appropriate viscosity, high purity, and high concentration can be obtained. In addition, the biodegradable polymer dispersion thus obtained can have excellent dispersibility, coatability, stability against bacteria, water resistance, and oil resistance. In addition, when a coating layer is formed on a substrate using the biodegradable polymer dispersion, the particles to be coated can be surface coated through low heat energy; thus, it has great technical significance in that it can accelerate production speed and secure process simplification.

Hereinafter, referring to Fig. 1, each step of the process for preparing a biodegradable polymer dispersion (S100) according to an embodiment will be described in detail.

### Step (1): Preparation of a biodegradable suspension comprising a polyhydroxyalkanoate (PHA) (S110)

The process for preparing a biodegradable polymer dispersion according to an embodiment comprises preparing a biodegradable suspension comprising a polyhydroxyalkanoate (PHA).

Polyhydroxyalkanoate (PHA) is a natural thermoplastic polyester polymer that accumulates in microbial cells. Since it is a biodegradable material, it can be composted and ultimately decomposed into carbon dioxide, water, and organic waste without generating toxic waste.

The polyhydroxyalkanoate (PHA) has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibits complete biodegradability, and is excellent in biocompatibility.

In particular, unlike other environmentally friendly plastic materials such as PBS, PLA, and PTT, polyhydroxyalkanoate (PHA) can be synthesized from more than 150 types of monomers, so that hundreds of types of PHAs can be prepared depending on the types of monomers. Hundreds of different types of PHAs depending on the types of monomers have completely different structures and properties.

Polyhydroxyalkanoate (PHA) may be composed of a single monomer repeat unit in living cells and may be formed by polymerizing one or more monomer repeat units. Specifically, the polyhydroxyalkanoate (PHA) may be a homo-polyhydroxyalkanoate or a polyhydroxyalkanoate copolymer, that is, a copolymer in which different repeat units are randomly distributed in the polymer chain.

The polyhydroxyalkanoate (PHA) may be obtained by cell disruption of microorganisms using a mechanical method or a physical method during aqueous purification, or it may be obtained by cell disruption of microorganisms using a nonmechanical method or a chemical method.

The polyhydroxyalkanoate (PHA) may have a weight average molecular weight of 10,000 g/mole to 1,000,000 g/mole, 30,000 g/mole to 1,000,000 g/mole, 50,000 g/mole to 1,000,000 g/mole, 70,000 g/mole to 1,000,000 g/mole, 100,000 g/mole to 1,000,000 g/mole, 100,000 g/mole to 800,000 g/mole, 200,000 g/mole to 1,000,000 g/mole, 200,000 g/mole to 800,000 g/mole, 300,000 g/mole to 1,000,000 g/mole, 300,000 g/mole to 800,000 g/mole, 400,000 g/mole to 1,000,000 g/mole, 500,000 g/mole to 1,000,000 g/mole, 500,000 g/mole to 800,000 g/mole, 550,000 g/mole to 1,000,000 g/mole, 550,000 g/mole to 800,000 g/mole, 600,000 g/mole to 1,000,000 g/mole, or 600,000 g/mole to 800,000 g/mole, but it is not limited thereto.

The polyhydroxyalkanoate (PHA) may be a copolymer comprising a repeat unit derived from at least one (at least one monomer) selected from the group consisting of 3-hydroxybutyrate (3-HB), 3-hydroxypropionate (3-HP), 3-hydroxyvalerate (3-HV), 3-hydroxyhexanoate (3-HH), 4-hydroxybutyrate (4-HB), 4-hydroxyvalerate (4-HV), 4-hydroxyhexanoate (4-HH), 5-hydroxyvalerate (5-HV), and 6-hydroxyhexanoate (6-HH), but it is not limited thereto.

The polyhydroxyalkanoate (PHA) may be a crystalline polyhydroxyalkanoate (cPHA), a semi-crystalline polyhydroxyalkanoate (scPHA), or an amorphous polyhydroxyalkanoate (aPHA) depending on the types of monomers and the content of repeat units derived therefrom. For example, the polyhydroxyalkanoate may be classified into cPHA, scPHA, or aPHA as its crystallinity is controlled depending on the content of a repeat unit derived from 4-hydroxybutyrate (4-HB).

Specifically, the polyhydroxyalkanoate (PHA) may comprise a poly(3-hydroxybutyrate-co-4-hydroxybutyrate) copolymer comprising a repeat unit derived from 3-hydroxybutyrate (3-HB); and a repeat unit derived from 4-hydroxybutyrate (4-HB).

The poly(3-hydroxybutyrate-co-4-hydroxybutyrate) copolymer may comprise a repeat unit derived from 4-hydroxybutyrate (4-HB) (repeat unit derived from 4-HB) in an amount of 0.1% by weight to 60% by weight based on the total weight of the poly(3-hydroxybutyrate-co-4-hydroxybutyrate) copolymer. Specifically, the content of a repeat unit derived from the 4-HB may be 0.5% by weight to 60% by weight, 1% by weight to 60% by weight, 5% by weight to 60% by weight, 10% by weight to 60% by weight, 10% by weight to 55% by weight, 10% by weight to 50% by weight, 10% by weight to 45% by weight, 10% by weight to 40% by weight, 15% by weight to 60% by weight, 15% by weight to 55% by weight, 15% by weight to 50% by weight, 15% by weight to 45% by weight, 15% by weight to 40% by weight, 17% by weight to 60% by weight, 17% by weight to 55% by weight, 17% by weight to 50% by weight, 17% by weight to 45% by weight, 17% by weight to 40% by weight, 18% by weight to 60% by weight, 18% by weight to 55% by weight, 18% by weight to 50% by weight, 18% by weight to 45% by weight, 18% by weight to 40% by weight, 20% by weight to 60% by weight, 20% by weight to 55% by weight, 20% by weight to 50% by weight, 20% by weight to 45% by weight, 20% by weight to 40% by weight, 25% by weight to 60% by weight, 25% by weight to 55% by weight, 25% by weight to 50% by weight, 25% by weight to 45% by weight, 25% by weight to 40% by weight, 28% by weight to 60% by weight, 28% by weight to 50% by weight, 28% by weight to 45% by weight, 28% by weight to 40% by weight, 30% by weight to 60% by weight, 30% by weight to 55% by weight, 30% by weight to 50% by weight, 30% by weight to 45% by weight, 30% by weight to 40% by weight, 20% by weight to 38% by weight, or 30% by weight to 38% by weight, based on the total weight of the copolymer.

For example, the polyhydroxyalkanoate (PHA) comprises a poly(3-hydroxybutyrate-co-4-hydroxybutyrate) copolymer, and the poly(3-hydroxybutyrate-co-4-hydroxybutyrate) copolymer may comprise a repeat unit derived from 4-hydroxybutyrate (4-HB) in an amount of 18% by weight to 60% by weight, 26% by weight to 60% by weight, or 30% by weight to 60% by weight, based on the total weight of the poly(3-hydroxybutyrate-co-4-hydroxybutyrate) copolymer.

As the content of a repeat unit derived from 4-HB is within the above range, the poly(3-hydroxybutyrate-co-4-hydroxybutyrate) copolymer may be amorphous PHA (aPHA). The biodegradable polymer dispersion according to an embodiment, in which such an amorphous PHA is dispersed, can form a coating layer with excellent mechanical properties, oil resistance, water resistance, thermal resistance, and the like.

The polyhydroxyalkanoate (PHA) may have a particle shape controlled to a predetermined size. Specifically, the polyhydroxyalkanoate (PHA) particles may be biodegradable polymer particles and may have an average particle diameter (D₅₀) of 0.5 µm to 5 µm. Specifically, the polyhydroxyalkanoate (PHA) may have an average particle diameter (D₅₀) of 0.6 µm or more, 0.8 µm or more, or 1.0 µm or more, and 5 µm or less, 4.5 µm or less, 4 µm or less, 3.5 µm or less, 3 µm or less, 2.5 µm or less, or 2 µm or less. As the average particle diameter (D₅₀) of the polyhydroxyalkanoate (PHA) particles is within the above range, a biodegradable polymer dispersion with excellent dispersibility can be obtained. When it is used to form a coating layer on a substrate (e.g., paper, fibers, metals, and the like), a coating layer with excellent mechanical properties, oil resistance, water resistance, thermal resistance, and the like can be formed.

According to an embodiment, step (1) may comprise mixing the polyhydroxyalkanoate (PHA) and a dispersant and carrying out dispersing treatment. Specifically, step (1) may comprise preparing a crude dispersion comprising the polyhydroxyalkanoate (PHA); and mixing the crude dispersion comprising the polyhydroxyalkanoate (PHA) and a dispersant and carrying out dispersing treatment.

That is, the polyhydroxyalkanoate (PHA) in the form of a crude dispersion comprising the polyhydroxyalkanoate (PHA) may be mixed with a dispersant. In such an event, the crude dispersion comprising the polyhydroxyalkanoate (PHA) may comprise the polyhydroxyalkanoate (PHA) with a solids content of 20% by weight or less, 15% by weight or less, or 10% by weight or less, based on the total weight of the crude dispersion. Specifically, the crude dispersion comprising the polyhydroxyalkanoate (PHA) may be a crude dispersion comprising the polyhydroxyalkanoate (PHA) with a solids content of 1% by weight to 20% by weight, 1% by weight to 15% by weight, 1% by weight to 10% by weight, 3% by weight to 15% by weight, 3% by weight to 10% by weight, 5% by weight to 15% by weight, or 5% by weight to 10% by weight. In addition, the crude dispersion comprising the polyhydroxyalkanoate (PHA) may be a solution in which the polyhydroxyalkanoate (PHA) is dispersed in an aqueous solvent (e.g., water).

According to an embodiment, the crude dispersion comprising the polyhydroxyalkanoate (PHA) may be a crude dispersion of an amorphous PHA at a low concentration with a solids content of 5% to 15% by weight, for example, 5% to 10% by weight.

Meanwhile, the dispersant may not be particularly limited as long as it is a material that can evenly disperse the polyhydroxyalkanoate (PHA). Specifically, the dispersant may comprise at least one selected from the group consisting of polyvinyl alcohol, polyvinylpyrrolidone, methyl polyethylene alkyl ether, sodium dodecylbenzene sulfonate, alkyl benzene sulfonate, nonylphenol ether sulfate, sodium lauryl sulfate, lithium dodecyl sulfate, alkyl phosphate, polypropylene glycol ester, coco betaine, and lecithin. Specifically, the dispersant may be used as dispersed in a solvent. More specifically, the dispersant may be a PVA dispersant in which the polyvinyl alcohol (PVA) is dispersed in an aqueous solvent (e.g., water). As the PVA dispersant is adopted, a suspension in which the polyhydroxyalkanoate (PHA) is homogeneously and evenly dispersed can be obtained.

The content of the polyvinyl alcohol (PVA) contained in the PVA dispersant may be 1% by weight to 50% by weight, 1% by weight to 40% by weight, 2% by weight to 30% by weight, 3% by weight to 20% by weight, or 3% by weight to 10% by weight, based on the total weight of the PVA dispersant, but it is not limited thereto.

The polyvinyl alcohol (PVA) may have a saponification value (degree of hydrolysis) of 1% by mole to 99% by mole, 5% by mole to 99% by mole, 10% by mole to 99% by mole, 20% by mole to 99% by mole, 30% by mole to 99% by mole, 40% by mole to 99% by mole, 45% by mole to 99% by mole, 48% by mole to 99% by mole, 50% by mole to 99% by mole, 60% by mole to 99% by mole, or 70% by mole to 98% by mole, but it is not limited thereto.

The content of the dispersant may be 0.01% by weight to 30% by weight based on the solids content of the PHA. For example, the solids content of the dispersant may be 0.01% by weight to 20% by weight, 0.01% by weight to 15% by weight, 0.01% by weight to 12% by weight, 0.02% by weight to 8% by weight, 0.05% by weight to 6% by weight, 0.1% by weight to 5% by weight, 0.2% by weight to 7% by weight, 0.3% by weight to 7% by weight, 0.5% by weight to 7% by weight, or 1% by weight to 7% by weight, but it is not limited thereto.

According to an embodiment, the dispersing treatment may be carried out at a rotational speed of 500 rpm to 30,000 rpm.

The mixing of the polyhydroxyalkanoate (PHA) and the dispersant may be carried out using a commonly known mixer (e.g., homomixer or the like). When the polyhydroxyalkanoate (PHA) and the dispersant are mixed (stirred) through the mixer, the rotational speed of the mixer may be 500 rpm to 30,000 rpm, 1,000 rpm to 30,000 rpm, 1,500 rpm to 30,000 rpm, 2,000 rpm to 30,000 rpm, 2,000 rpm to 25,000 rpm, 2,000 rpm to 20,000 rpm, 2,000 rpm to 15,000 rpm, 3,000 rpm to 15,000 rpm, 4,000 rpm to 10,000 rpm, 5,000 rpm to 8,500 rpm, 5,300 rpm to 8,300 rpm, or 5,500 rpm to 8,200 rpm. The rotational speed may be adjusted depending on the type and size of the equipment, but it is not limited thereto. For example, the rotational speed may be selected according to the impeller diameter size of the equipment based on the linear speed of the homomixer of 150 cm/s to 2,000 cm/s.

### Step (2): Filtration of the biodegradable suspension using rotor separation (S120)

The process for preparing a biodegradable polymer dispersion according to an embodiment comprises filtering the biodegradable suspension obtained in step (1) using rotor separation.

As the process for preparing a biodegradable polymer dispersion comprises filtration using rotor separation, it is possible to obtain a dispersion with high viscosity, high concentration, and high purity in which a polyhydroxyalkanoate (PHA) with a fine particle size is homogeneously dispersed. In particular, since the occurrence of agglomeration or precipitation can be minimized, production speed can be accelerated, and process simplification and process efficiency can be secured.

Specifically, step (2) is a method of filtration by precipitation owing to rotational force using rotor separation. For example, it may be carried out using centrifuge, preferably a high-speed centrifuge.

For example, the biodegradable suspension is placed in the container (drum) of the high-speed centrifuge, which is a rotor separator, and it is rotated at a high speed to homogeneously and finely separate and filter the substances in the biodegradable suspension according to the density and size of the substance.

When the rotor separation is used, the degree of agglomeration, degree of fine particles, solids content, viscosity, coating amount, stability against bacteria, water resistance, and oil resistance of the final biodegradable polymer dispersion may vary depending on the relative centrifugal force (RCF).

The relative centrifugal force refers to the ratio of gravity and centrifugal force acting on particles in the biodegradable suspension, which may be expressed as G'-force.

According to an embodiment, the rotational force of the rotor separation can further enhance productivity while minimizing the occurrence of agglomeration or precipitation, thereby obtaining a dispersion with high purity, high concentration, and optimal viscosity. It may be an important factor in enhancing stability against bacteria, oil resistance, and water resistance.

Specifically, the rotor separation in step (2) may be carried out with a rotational force of greater than 900 g in G'-force. For example, the rotor separation in step (2) may be carried out with a rotational force of 1,000 g or more, 1,500 g or more, 2,000 g or more, 3,000 g or more, 4,000 g or more, 5,000 g or more, 7,000 g or more, 8,000 g or more, 10,000 g or more, 12,000 g or more, 15,000 g or more, 17,000 g or more, 18,000 g or more, or 20,000 g or more, and less than 35,000 g, 30,000 g or less, 29,000 g or less, 28,000 g or less, 25,000 g or less, 23,000 g or less, 22,000 g or less, or 21,000 g or less, in G'-force. For example, the rotor separation in step (2) may be carried out with a rotational force of greater than 900 g to less than 35,000 g, 1,000 g to 30,000 g, 3,000 g to 30,000 g, 5,000 g to 30,000 g, 7,000 g to 30,000 g, 10,000 g to 30,000 g, 15,000 g to 30,000 g, 15,000 g to 25,000 g, 18,000 g to 30,000 g, 18,000 g to 25,000 g, or 18,000 g to 22,000 g, in G'-force. When the rotational force of the rotor separation satisfies the above range, agglomeration can be minimized, a dispersion with high viscosity, high concentration, and high purity can be obtained, coatability, stability against bacteria, water resistance, and oil resistance can be enhanced, and productivity and process efficiency can be enhanced.

Specifically, based on a cylindrical drum with a diameter of about 45 cm in a high-speed centrifugal separator, it may be rotated at a speed of about 2,000 to 15,000 rpm, greater than 3,000 to less than 15,000 rpm, 3,500 to 14,000 rpm, or 5,000 to 13,000 rpm to generate a rotational force of greater than 900 g in G'-force. The G'-force may vary in rotational speed depending on the diameter of centrifugal equipment, such as a high-speed centrifugal separator.

Meanwhile, according to an embodiment, an additive may be added to the biodegradable suspension before using the rotor separation. The additive is not particularly limited as long as it is a commonly known additive. Specifically, the additive may comprise at least one selected from the group consisting of a thickener, wax, a pH adjuster, an antifoaming agent, and an antibacterial agent. More specifically, the additive may comprise an antifoaming agent.

The antifoaming agent is not particularly limited as long as it is a commonly known substance. Specifically, the antifoaming agent may comprise at least one selected from the group consisting of an inorganic particle antifoaming agent, an oil-type antifoaming agent, and a polymer antifoaming agent. More specifically, the antifoaming agent may comprise at least one selected from the group consisting of a silicone antifoaming agent, a mineral oil antifoaming agent, and a polysiloxane antifoaming agent.

The pH adjuster, thickener, wax, and antibacterial agent are not particularly limited as long as they are commonly known substances. For example, they may comprise the additives enumerated in step (3).

According to an embodiment, once the antifoaming agent has been added to the suspension, high-speed dispersion treatment is carried out, and filtration using rotor separation is carried out to obtain a PHA suspension (e.g., amorphous PHA suspension) with high viscosity, high concentration, and high purity. In such an event, the high-speed dispersion treatment is the same as that described in step (1) (dispersion treatment in step (1)).

### Step (3): Subjecting the filtered result to heating treatment (S130)

The process for preparing a biodegradable polymer dispersion according to an embodiment may further comprise subjecting the filtered result obtained in step (2) to heating treatment.

Specifically, step (3) is a step of heating the suspension at a temperature significantly lower than the conventional high-temperature sterilization temperature (e.g., 145°C or higher) to sterilize the suspension.

More specifically, after step (2), a step of subjecting the filtered result to heating treatment at 50°C to 80°C for 10 minutes or longer may be further carried out. For example, the heating treatment may be carried out at 50°C to 75°C, 50°C to 70°C, or 60°C to 70°C, for 15 minutes to 60 minutes, 15 minutes to 50 minutes, 15 minutes to 40 minutes, 20 minutes to 60 minutes, 20 minutes to 50 minutes, or 20 minutes to 40 minutes.

As the suspension is subjected to heating treatment, sterilization treatment can be efficiently carried out while changes in the physical properties of the biodegradable polymer (e.g., polyhydroxyalkanoate (PHA)) contained in the suspension can be minimized. As the suspension subjected to the heating treatment is used to prepare the biodegradable polymer dispersion according to an embodiment, a biodegradable polymer dispersion with excellent stability against bacteria and dispersion stability can be provided.

Meanwhile, after the heating treatment step, a step of adding an additive to the suspension subjected to heating treatment may be further carried out. The additive is not particularly limited as long as it is a commonly known additive.

Specifically, the suspension subjected to heating treatment may be mixed with an additive to be formulated.

More specifically, after the heating treatment step, a step of adding an additive comprising at least one selected from the group consisting of a thickener, wax, a pH adjuster, an antifoaming agent, and an antibacterial agent may be further carried out. The additive may comprise two or more selected from the group consisting of a thickener, wax, a pH adjuster, an antifoaming agent, and an antibacterial agent. The additives may be selected depending on the desired physical properties and use.

In addition, the additives may be added simultaneously or stepwise.

According to an embodiment, the additives may be added simultaneously.

According to another embodiment, the additives may be added stepwise. When the additives are added stepwise, an efficiently formulated biodegradable polymer dispersion can be prepared from the suspension.

The thickener is not particularly limited as long as it is a substance that can control the viscosity of the suspension. Specifically, the thickener may comprise at least one selected from the group consisting of starch, xanthan gum, guar gum, carboxymethyl cellulose (CMC), and carrageenan gum.

The wax is not particularly limited as long as it is a commonly known substance. Specifically, the wax may comprise at least one selected from the group consisting of bees wax, soy wax, and carnauba wax.

The antifoaming agent is not particularly limited as long as it is a commonly known substance. Specifically, it may comprise at least one selected from the group consisting of an inorganic particle antifoaming agent, an oil-type antifoaming agent, and a polymer antifoaming agent. For example, the antifoaming agent may comprise at least one selected from the group consisting of a silicone antifoaming agent, a mineral oil antifoaming agent, and a polysiloxane antifoaming agent.

The antibacterial agent is not particularly limited as long as it is a commonly known substance. Specifically, the antibacterial agent may comprise at least one selected from the group consisting of alcohol, salicylic acid, benzoic acid, licorice extract, yucca extract, chitooligosaccharide, chitosan, 4,5-dichloro-2-n-octyl-4-isothiazolin-3-one (DCOIT), octylisothiazolone (OIT), and benzisothiazolone (BIT).

The pH adjuster refers to a substance that is added to a solution to adjust pH. It may comprise both a pH reducing agent for decreasing the pH and a pH increasing agent for increasing the pH. Specifically, the pH reducing agent may be a strongly acidic substance such as sulfuric acid and hydrochloric acid or an aqueous ammonium salt solution, and the pH increasing agent may be a basic substance such as ammonia water, sodium hydroxide, lithium hydroxide, and potassium hydroxide, or an aqueous acetate salt solution, but they are not limited thereto. For example, the pH adjuster may be at least one selected from the group consisting of acetic acid, lactic acid, hydrochloric acid, phosphoric acid, sodium hydroxide, citric acid, malic acid, fumaric acid, potassium phosphate, sodium bicarbonate, and sodium phosphate.

The amounts of the thickener, wax, pH adjuster, antifoaming agent, and antibacterial agent added (used) may each be 0.001% by weight to 20% by weight, 0.005% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the solids content of the biodegradable polymer dispersion.

The solids content of the biodegradable polymer dispersion prepared according to the above preparation process may be 10% by weight to 60% by weight. Specifically, the solids content of the biodegradable polymer dispersion may be 20% by weight to 60% by weight, 20% by weight to 50% by weight, 30% by weight to 60% by weight, 30% by weight to 50% by weight, or 35% by weight to 45% by weight.

For example, according to an embodiment, a crude amorphous PHA dispersion with a low concentration of solids content of, for example, 10% by weight or less may be used to obtain an amorphous biodegradable polymer dispersion with a high concentration of solids content of, for example, 20% by weight to 50% by weight.

Specifically, a crude amorphous PHA dispersion with a low concentration of solids content of, for example, 10% by weight or less may be used to obtain an amorphous biodegradable polymer dispersion with a high concentration of solids content of, for example, 20% by weight to 50% by weight and an optimal viscosity of 20 cPs to 10,000 cPs.

As described above, the process for preparing a biodegradable polymer dispersion carries out filtering a biodegradable suspension by precipitation owing to rotational force using rotor separation, wherein the biodegradable suspension comprises a polyhydroxyalkanoate (PHA) comprising a repeat unit derived from 4-hydroxybutyrate (4-HB) in a specific amount. Thus, a stable dispersion with appropriate viscosity, high purity, and high concentration can be obtained. Further, when a coating layer is formed using the dispersion, the particles to be coated can be surface coated through low heat energy; thus, it is possible to secure accelerated production speed and process simplification.

### Biodegradable polymer dispersion

According to an embodiment, there is provided a biodegradable polymer dispersion prepared by the above preparation process. Specifically, the biodegradable polymer dispersion is prepared by the process for preparing a biodegradable polymer dispersion and has a solids content of 10% by weight to 60% by weight. The solids content of the biodegradable polymer dispersion is as described above.

The biodegradable polymer dispersion prepared by the process for preparing a biodegradable polymer dispersion has high viscosity, high concentration, and high purity. Since it has excellent dispersibility and coatability, it can be advantageously used as a coating solution to increase the lifespan and recyclability of various products such as paper, films, fibers, packaging materials, metals, and various containers. In addition, the biodegradable polymer dispersion has excellent stability against bacteria (bacterial stability) and can enhance the lifespan and quality of biodegradable products. A coating layer formed using the same can have excellent water resistance and oil resistance. Since the biodegradable polymer dispersion with the above characteristics can be advantageously used as an additive for various formulations and improvement of physical properties, it is advantageous in terms of expanding its use.

The biodegradable polymer dispersion according to an embodiment comprises the polyhydroxyalkanoate (PHA) particles described above as biodegradable polymer particles; the dispersant described above; the additives described above; and a dispersing solvent (e.g., water or the like).

In addition, the biodegradable polymer dispersion may comprise an additive comprising at least one selected from the group consisting of a thickener, wax, a pH adjuster, an antifoaming agent, and an antibacterial agent.

The additive is not particularly limited, and its specific types are as described above.

The biodegradable polymer dispersion according to an embodiment may have a viscosity that ensures coatability, workability, and the like. Specifically, the biodegradable polymer dispersion according to an embodiment may have a viscosity of greater than 10 cPs to 10,000 cPs when measured with a Brookfield viscometer at 25°C. Specifically, the viscosity of the biodegradable polymer dispersion at 25°C may be 20 cPs to 10,000 cPs, 30 cPs to 10,000 cPs, 50 cPs to 10,000 cPs, 100 cPs to 10,000 cPs, 200 cPs to 10,000 cPs, 300 cPs to 10,000 cPs, 400 cPs to 10,000 cPs, 500 cPs to 10,000 cPs, 300 cPs to 8,000 cPs, 300 cPs to 6,000 cPs, 300 cPs to 5,000 cPs, 300 cPs to 4,000 cPs, 300 cPs to 3,000 cPs, 300 cPs to 2,000 cPs, 300 cPs to 1,000 cPs, 200 cPs to 2,000 cPs, 300 cPs to 1,500 cPs, 350 cPs to 1,200 cPs, 400 cPs to 1,000 cPs, 400 cPs to 900 cPs, 400 cPs to 800 cPs, 400 cPs to 700 cPs, 500 cPs to 700 cPs, or 500 cPs to 600 cPs. When the biodegradable polymer dispersion has a viscosity satisfying the above range, it may be advantageous for achieving the desired effects.

The biodegradable polymer dispersion according to an embodiment may have a pH that ensures long-term storage stability and the like. Specifically, the biodegradable polymer dispersion according to an embodiment may have a pH of 5 to 11, more specifically, 6 to 11, 6 to 10, or 8 to 10, but it is not limited thereto.

Meanwhile, when a coating layer is formed from the biodegradable polymer dispersion at a coating amount of 15 g/m² on a substrate, and when the Cobb water absorption test is performed according to the TAPPI T441 standard, the water resistance may be 3 g/m² to 50 g/m².

Specifically, the water resistance of the coating layer may be 3 g/m² to 40 g/m², 3 g/m² to 30 g/m², 3 g/m² to less than 30 g/m², 3 g/m² to 25 g/m², 3 g/m² to 20 g/m², 3 g/m² to 15 g/m², 5 g/m² to 18 g/m², or 5 g/m² to 15 g/m².

The water resistance may be measured through the Cobb water absorption test (test conditions: 25 ml and 10 minutes) according to the TAPPI T441 standard.

In addition, when a coating layer is formed from the biodegradable polymer dispersion at a coating amount of 15 g/m² on a substrate, which is evaluated according to the TAPPI T559 standard, the oil resistance kit rating may be 5 or higher.

Specifically, a kit rating test reagent is dropped from a specific height on the surface of a biodegradable article (5 cm in width and 15 cm in length) prepared from the biodegradable polymer dispersion, specifically, on the coating layer formed on one side of the biodegradable article. Then, after a certain period of time (e.g., about 15 seconds) has elapsed, the excess kit rating test reagent is wiped out with a clean tissue or cotton swatch, and the surface is immediately visually inspected to determine the oil resistance kit rating.

In this test, if it darkens significantly as compared with the surface on which the test reagent was not dropped, it is determined as failure; and, if not, it is determined as pass. The above test is repeated with higher kit rating test reagents until a failing kit rating test reagent is observed. The oil resistance kit rating may be determined as the average of the highest kit rating reagents that passed.

The oil resistance kit rating is classified from 1 to 12. The larger the number, the better the oil resistance.

Since the biodegradable polymer dispersion according to an embodiment has excellent stability against bacteria, it has excellent long-term storage stability. Since it has excellent coatability, it can be advantageously used as a coating solution to increase the lifespan and recyclability of various products such as paper, films, fibers, packaging materials, metals, and various containers.

### Biodegradable article

According to an embodiment, there is provided a biodegradable article, which comprises a substrate; and a biodegradable coating layer formed on at least one side of the substrate using the biodegradable polymer dispersion.

The substrate is not particularly limited as long as it can form a biodegradable coating layer from the biodegradable polymer dispersion on the surface of the substrate. For example, the substrate may be at least one selected from the group consisting of paper, kraft paper, a woven fabric, a knitted woven, nonwoven fabric, a polyester film such as polyethylene terephthalate (PET), polybutylene succinate (PBS), polybutylene adipate (PBA), polybutylene adipate terephthalate (PBAT), and polybutylene succinate terephthalate (PBST), and a polyimide (PI) film.

Specifically, the substrate may preferably be a substrate of a single material from the viewpoint of enhancing the coatability of the substrate. The substrate may be paper, kraft paper, woven fabric, or nonwoven fabric, but it is not limited thereto. In addition, when the substrate comprises paper or kraft paper, it may be more advantageous for providing an environmentally friendly packaging material since it has better biodegradability than other plastic materials.

The substrate may have a thickness of 15 µm or more. For example, the thickness of the substrate may be 15 µm or more, 20 µm or more, 50 µm or more, 70 µm or more, 100 µm or more, 130 µm or more, 150 µm or more, 200 µm or more, 300 µm or more, or 500 µm or more.

In addition, the substrate may have a basis weight of 30 g/m² to 500 g/m². For example, when the substrate is paper, kraft paper, woven fabric, knitted fabric, or nonwoven fabric, the basis weight of the substrate may be 30 g/m² to 500 g/m², 30 g/m² to 350 g/m², 30 g/m² to 200 g/m², 50 g/m² to 200 g/m², 80 g/m² to 200 g/m², 100 g/m² to 200 g/m², 130 g/m² to 190 g/m², 150 g/m² to 185 g/m², or 120 g/m² to 320 g/m².

Meanwhile, a barrier layer may be disposed on at least one side of the substrate. An environmentally friendly barrier film may be coated on the surface of the substrate to have moisture and/or oxygen barrier properties, or a functional coating layer having antistatic properties or adhesive properties may be further formed. The functional coating layer may comprise a primer coating layer and/or an adhesive coating layer, which may have materials and physical properties that are commonly used as long as they do not impair the desired effects.

For example, the substrate may comprise a barrier layer or a functional coating layer, and the barrier layer or the functional coating layer may be positioned on one side of the substrate or one side of the biodegradable coating layer.

In addition, the biodegradable coating layer may have a thickness of 5 µm to 50 µm, 5 µm to 40 µm, or 6 µm to 30 µm.

The biodegradable article comprising the biodegradable coating layer may be a packaging material, a cardboard box, a shopping bag, a disposable tableware, a packaging container, or a paper straw, but it is not limited thereto.

The biodegradable article not only has excellent biodegradability and recyclability, but also has excellent water resistance and oil resistance and excellent stability against bacteria; thus, it can achieve long lifespan and high quality.

The water resistance, oil resistance, and stability against bacteria of the biodegradable article are as described in the biodegradable polymer dispersion.

### Process for preparing a biodegradable article

According to an embodiment, there is provided a process for preparing the biodegradable article.

The process for preparing the biodegradable article comprises preparing the biodegradable polymer dispersion; and forming a biodegradable coating layer on at least one side of a substrate using the biodegradable polymer dispersion. For example, the biodegradable article may be obtained in the form of a film comprising a biodegradable coating layer by the above preparation process.

The process for preparing a biodegradable polymer dispersion is as described above, and the substrate is also as described above.

The step of forming a biodegradable coating layer may be carried out by applying the biodegradable polymer dispersion on at least one side of a substrate and drying it.

Specifically, the amount of the biodegradable polymer dispersion coated on at least one side of a substrate may be 5 g/m² to 100 g/m², 5 g/m² to 85 g/m², 5 g/m² to 70 g/m², 8 g/m² to 60 g/m², 9 g/m² to 50 g/m², 5 g/m² to 50 g/m², 6 g/m² to 40 g/m², 7 g/m² to 30 g/m², 10 g/m² to 40 g/m², or 10 g/m² to 30 g/m². As the coating amount satisfies the above range, coatability, productivity, and processability can be further enhanced.

In addition, the coating may be performed once to form a single coating layer or may be performed twice or more to form a plurality of coating layers. The coating amount can be adjusted within the above range depending on the desired number of coating layers. Specifically, the coating amount may be the total amount applied to a plurality of coating layers.

Once the biodegradable polymer dispersion has been applied onto the substrate, it may be dried for 5 seconds to 30 minutes at 50°C to 200°C. For example, the drying may be carried out at 60°C to 200°C, 80°C to 185°C, 80°C to 150°C, or 80°C to 130°C, for 5 seconds to 30 minutes, 10 seconds to 20 minutes, 10 seconds to 10 minutes, 10 seconds to 5 minutes, 10 seconds to 3 minutes, 10 seconds to 1 minutes, 10 seconds to 50 seconds, or 10 seconds to 30 seconds.

The formation of a biodegradable coating layer may be carried out without particular limitations as long as it is a coating process generally used in the art. For example, the formation of a biodegradable coating layer may be carried out by gravure coating, slot coating, doctor blade coating, spray coating, bar coating, spin coating, or in-line coating, but it is not limited thereto.

When the biodegradable article is prepared using the biodegradable polymer dispersion, the particles to be coated can be surface coated through low heat energy; thus, it is possible to secure accelerated production speed and process simplification and to readily achieve desired physical properties.

### Mode for the Invention

Hereinafter, the present disclosure will be described in detail with reference to Examples, but the scope of the present disclosure is not limited to the Examples.

### Example

### Example 1

### [Preparation of a biodegradable polymer dispersion]

### Step (1): Preparation of a biodegradable suspension comprising a polyhydroxyalkanoate (PHA)

Distilled water was added to polyhydroxyalkanoate (PHA) particles (Mw: 600,000 g/mole, content of a repeat unit derived from 4-HB: 34% by weight, manufacturer: CJ CheilJedang) obtained through physical crushing to obtain a crude amorphous PHA dispersion with a low concentration of solids content of 8% by weight.

50 liters of the crude PHA dispersion and 5 parts by weight of a polyvinyl alcohol (PVA, degree of saponification: 80% by mole, average degree of polymerization: 13,000, manufacturer: Kuraray) relative to 100 parts by weight of the solids content of the PHA were charged to a homomixer (product name: Homomixer Mark2, manufacturer: PRIMIX). They were subjected to high-speed dispersion treatment at a linear speed of 1,250 cm/s to prepare a biodegradable suspension containing an amorphous PHA at low concentration.

### Step (2): Filtration of the biodegradable suspension using rotor separation

0.5% by weight of a polysiloxane antifoaming agent based on the solids content of the biodegradable suspension obtained in step (1) was added thereto, which was then stirred at high speed under the same conditions as above. It was filtered with a rotational force of approximately 20,500 g in G'-force using a high-speed centrifuge (product name: Clara 20, manufacturer: Alfa Laval, cylindrical drum with a diameter of approximately 45 cm) to obtain an amorphous suspension with a high concentration of solids content of 40% by weight.

### Step (3): Heating treatment of the filtered suspension

The amorphous suspension with high concentration obtained in step (2) was heated at a temperature of about 60°C for about 20 minutes while it was stirred at low speed, which was then cooled to room temperature.

Thereafter, additives such as 0.7% by weight of carrageenan gum as a thickener and 0.01% by weight of a polysiloxane as an antifoaming agent, based on the solids content of the amorphous suspension with high concentration, were added to the amorphous suspension with high concentration to obtain a biodegradable polymer dispersion (PHA dispersion).

### [Preparation of a biodegradable article (film)]

The biodegradable polymer dispersion was coated onto a substrate at a coating amount of about 15 g/m² using a bar coater (mayer bar coater, manufacturer: RDS), and it was dried at about 100°C for about 20 seconds to prepare a biodegradable article (film) with a biodegradable coating layer formed. Here, uncoated kraft paper with a basis weight of 180 g/m² was used as the substrate.

### Example 2

A PHA dispersion and a film were prepared through the same procedure as in Example 1, except that the type of PHA (solids content: 9% by weight, content of a repeat unit derived from 4-HB: 50% by weight, Mw: 800,000 g/mole, manufacturer: CJ CheilJedang) was changed when the crude PHA dispersion was prepared in step (1).

### Example 3

A PHA dispersion and a film were prepared through the same procedure as in Example 1, except that the type of PHA (solids content: 8% by weight, content of a repeat unit derived from 4-HB: 25% by weight, Mw: 700,000 g/mole, manufacturer: CJ CheilJedang) was changed when the crude PHA dispersion was prepared in step (1).

### Comparative Example 1

A PHA dispersion and a film were prepared through the same procedure as in Example 1, except that the type of PHA (solids content: 8% by weight, content of a repeat unit derived from 4-HB: 17% by weight, Mw: 700,000 g/mole, manufacturer: CJ CheilJedang) was changed when the crude PHA dispersion was prepared in step (1).

### Comparative Example 2

A PHA dispersion and a film were prepared through the same procedure as in Example 1, except that the type of PHA (solids content: 8% by weight, content of a repeat unit derived from 4-HB: 25% by weight, Mw: 500,000 g/mole, manufacturer: CJ CheilJedang) was changed when the crude PHA dispersion was prepared in step (1).

### Comparative Example 3

A PHA dispersion and a film were prepared through the same procedure as in Example 1, except that the biodegradable suspension was filtered with a rotational force of approximately 900 g in G'-force using the high-speed centrifuge.

### Comparative Example 4

A PHA dispersion and a film were prepared through the same procedure as in Example 1, except that the biodegradable suspension was filtered with a rotational force of approximately 35,000 g in G'-force using the high-speed centrifuge.

### Comparative Example 5

A PHA dispersion and a film were prepared through the same procedure as in Example 1, except that, in step (2), filtering was carried out using a filter press (product name: F-SA-1000-40, manufacturer: APK) instead of the high-speed centrifuge.

The biodegradable polymer dispersions (PHA dispersions) and films of the Examples and Comparative Examples were each evaluated as follows.

### Test Example

### Test Example 1: Preparation of an emulsion

The preparation of an emulsion of the biodegradable polymer dispersion was evaluated depending on the solids content and agglomeration, and the results are shown in the table 1 below. Here, agglomeration was observed with the naked eye.
⊚: When the solids content of the biodegradable polymer dispersion was 30% by weight or more, and an emulsion was well prepared without agglomeration.
∘: When the solids content of the biodegradable polymer dispersion was 8% by weight or more to less than 30% by weight, and slight agglomeration took place.
△: When the solids content of the biodegradable polymer dispersion was 5% by weight or more to less than 8% by weight, and agglomeration took place while preparation was possible.
×: When the solids content of the biodegradable polymer dispersion was less than 5% by weight, and preparation or fine particles recovery due to agglomeration was not possible.

### Test Example 2: Solids content

The biodegradable polymer dispersion was dried at a temperature of 170°C for 10 minutes, and the moisture evaporation amount was then measured. The results are shown in Table 1 below.

### Test Example 3: Viscosity

Measurements were made using spindle #63 at 12 rpm using DV-1 VISCOMETER (BROOKFIELD) equipment. The results are shown in Table 1 below.

### Test Example 4: Evaluation of stability against bacteria

Three types of dry media (Petrifilm from 3M) were prepared for general bacteria, fungi, and *E. coli.* 1 ml of the PHA dispersion was diluted 10 times in 9 ml of sterilized water to prepare a diluted solution. It was subjected to vortex for 1 minute, and 1 ml was taken and evenly distributed into each dry medium. Next, the dry medium for general bacteria was cultured at 35°C for 48 hours, the dry medium for fungi was cultured at 25°C for 48 hours, and the dry medium for *E. coli* was cultured at 35°C for 24 hours. Upon completion of the culturing, the number of colonies was measured and evaluated as follows. The results are shown in Table 1 below.
Contaminated: When the number of colonies measured was 10 or more
Pass: When the number of colonies measured was less than 10

### Test Example 5: Coating amount

When a film was prepared by coating each of the biodegradable polymer dispersions prepared in the Examples and Comparative Examples onto a substrate, Mayer bar coater #18 was used. The coating layer was dried at about 100°C for 20 seconds, and the coating amount was measured. The results are shown in Table 1 below.

### Test Example 6: Measurement of water resistance

The biodegradable articles prepared in the Examples and Comparative Examples were each subjected to the Cobb water absorption test (test conditions: 25 ml and 10 minutes) according to the TAPPI T441 standard. The results are shown in Table 1 below.

### Test Example 7: Measurement of oil resistance

The biodegradable articles prepared in the Examples and Comparative Examples were each evaluated for the oil resistance kit rating according to the TAPPI T559 standard.

Specifically, five drops of a kit rating test reagent were dropped from a height of 2.54 cm on the surface of the biodegradable article (5 cm in width and 15 cm in length) prepared from each of the biodegradable polymer dispersions in the Examples and Comparative Examples, specifically, on the coating layer formed on one side of the biodegradable article. After 15 seconds had elapsed, the excess kit rating test reagent was wiped out with a clean tissue or cotton swatch, and the surface was immediately visually inspected.

If it darkened significantly as compared with the coating surface on which the test reagent was not dropped, it was determined as failure; and, if not, it was determined as pass. The above test was repeated with higher kit rating test reagents until a failing kit rating test reagent was observed. The oil resistance kit rating was determined as the average of the highest kit rating reagents that passed.

The oil resistance kit rating was classified from 1 to 12. The larger the number, the better the oil resistance. The results are shown in Table 1 below.

**[Table 1]**

| | Preparation of an emulsion | Solids content (%) | Viscosity (cps) | Stability against bacteria | Coating amount (g/m²) | Water resistance (g/m²) | Oil resistance (kit No.) |
|---|---|---|---|---|---|---|---|
| Ex. 1 | ⊚ | 40 | 600 | Pass | 15 | 8 | 5 |
| Ex. 2 | ⊚ | 40 | 500 | Pass | 15 | 15 | 8 |
| Ex. 3 | ⊚ | 40 | 600 | Pass | 15 | 10 | 5 |
| C. Ex. 1 | × | - | - | - | - | - | - |
| C. Ex. 2 | × | - | - | - | - | - | - |
| C. Ex. 3 | ○ | 9 | 20 | Pass | 5 | 30 | 1 |
| C. Ex. 4 | × | - | - | - | - | - | - |
| C. Ex. 5 | × | - | - | Contaminated | 4 | 40 | 0 |

As can be seen from Table 1 above, the biodegradable polymer dispersions prepared according to the Examples were each a dispersion with high concentration and excellent in viscosity, stability against bacteria (bacterial stability), coating amount, water resistance, and oil resistance.

Specifically, the biodegradable polymer dispersions prepared according to Examples 1 to 3 each had a solids content of 40% by weight or more and a viscosity of 500 to 600 cPs, indicating that a dispersion (emulsion) with high viscosity and high concentration was prepared, and no bacterial contamination took place, showing excellent stability (resistance) against bacteria. In addition, the water resistance was 8 to 15 g/m², and the oil resistance kit rating was 5 or higher, which were all excellent.

In contrast, the biodegradable polymer dispersions prepared in Comparative Examples 1, 2, and 4 were impossible to prepare an emulsion due to agglomeration. The biodegradable polymer dispersion prepared in Comparative Example 3 was possible to be prepared in the form of an emulsion, whereas the solids content was 9% by weight, and the viscosity was 20 cPs, indicating that the solids content and viscosity were significantly lower than those of the biodegradable polymer dispersions prepared in Examples 1 to 3. The oil resistance kit rating was just 1.

Meanwhile, the biodegradable polymer dispersion prepared in Comparative Example 5 had low concentration and low viscosity, making recovery of fine particles impossible.

The above results show that the process for preparing a biodegradable polymer dispersion according to the Examples is excellent in productivity and process efficiency and is capable of readily producing a biodegradable polymer dispersion with high viscosity, high concentration, and high purity. In addition, the biodegradable polymer dispersion prepared from the above preparation process not only has stability against bacteria, but is also significantly enhanced in water resistance and oil resistance of the coating layer when coated on a substrate; thus, it can be advantageously used as a coating solution to increase the lifespan, quality, and recyclability of various products.

## Claims

1. A process for preparing a biodegradable polymer dispersion, which comprises:
(1) preparing a biodegradable suspension comprising a polyhydroxyalkanoate (PHA); and
(2) filtering the biodegradable suspension using rotor separation,
wherein a solids content of the biodegradable polymer dispersion is 10% by weight to 60% by weight, and the polyhydroxyalkanoate (PHA) comprises a repeat unit derived from 4-hydroxybutyrate in an amount of 0.1% by weight to 60% by weight based on the total weight of the polyhydroxyalkanoate (PHA).

2. The process for preparing a biodegradable polymer dispersion of claim 1, wherein the rotor separation in step (2) is carried out with a rotational force of greater than 900 g in G'-force.

3. The process for preparing a biodegradable polymer dispersion of claim 2, wherein the rotor separation in step (2) is carried out with a rotational force of greater than 900 g to less than 35,000 g in G'-force.

4. The process for preparing a biodegradable polymer dispersion of claim 1, wherein the rotor separation in step (2) is carried out using centrifuge.

5. The process for preparing a biodegradable polymer dispersion of claim 1, which further comprises, after step (2), heating the filtered product at a temperature of 50°C to 80°C for at least 10 minutes.

6. The process for preparing a biodegradable polymer dispersion of claim 5, which further comprises, after the heating treatment step, adding an additive comprising at least one selected from the group consisting of a thickener, wax, a pH adjuster, an antifoaming agent, and an antibacterial agent.

7. The process for preparing a biodegradable polymer dispersion of claim 1, wherein step (1) comprises mixing the polyhydroxyalkanoate (PHA) and a dispersant to perform a dispersing treatment.

8. The process for preparing a biodegradable polymer dispersion of claim 7, wherein the dispersant comprises at least one selected from the group consisting of polyvinyl alcohol, polyvinylpyrrolidone, methyl polyethylene alkyl ether, sodium dodecylbenzene sulfonate, alkyl benzene sulfonate, nonylphenol ether sulfate, sodium lauryl sulfate, lithium dodecyl sulfate, alkyl phosphate, polypropylene glycol ester, coco betaine, and lecithin.

9. The process for preparing a biodegradable polymer dispersion of claim 1, wherein the polyhydroxyalkanoate (PHA) comprises a poly(3-hydroxybutyrate-co-4-hydroxybutyrate) copolymer, and the poly(3-hydroxybutyrate-co-4-hydroxybutyrate) copolymer comprises a repeat unit derived from 4-hydroxybutyrate in an amount of 18% by weight to 60% by weight based on the total weight of the poly(3-hydroxybutyrate-co-4-hydroxybutyrate) copolymer.

10. The process for preparing a biodegradable polymer dispersion of claim 1, wherein the polyhydroxyalkanoate (PHA) has a weight average molecular weight of 550,000 g/mole to 1,000,000 g/mole.

11. A biodegradable polymer dispersion, which is prepared by the preparation process according to any one of claims 1 to 10.

12. The biodegradable polymer dispersion of claim 11, wherein the viscosity measured with a Brookfield viscometer at 25°C is greater than 10 cPs to 10,000 cPs.

13. The biodegradable polymer dispersion of claim 11, wherein, when a coating layer is formed from the biodegradable polymer dispersion at a coating amount of 15 g/m² on a substrate, and when the Cobb water absorption test is performed according to the TAPPI T441 standard, the water resistance is 3 g/m² to 50 g/m².

14. The biodegradable polymer dispersion of claim 11, wherein, when a coating layer is formed from the biodegradable polymer dispersion at a coating amount of 15 g/m² on a substrate, which is evaluated according to the TAPPI T559 standard, an oil resistance kit rating is 5 or higher.

15. A biodegradable article, which comprises a substrate; and a biodegradable coating layer formed on at least one side of the substrate using the biodegradable polymer dispersion of claim 11.
